# EUROPÄISCHE PATENTSCHRIFT

(11) **EP 0 795 615 B1**
(45) Veröffentlichungstag und Bekanntmachung des Hinweises auf die Patenterteilung: **12.09.2001**
(21) Anmeldenummer: 97102118.3
(22) Anmeldetag: 11.02.1997
(51) Int. Cl.: C21D 9/30, C21D 1/10

(54) **Verfahren und Vorrichtung zum induktiven Randschichthärten von Werkstücken**
Method and device for inductive surface hardening of workpieces
Procédé et dispositif pour la trempe superficielle par induction de pièces

(30) Priorität: 16.03.1996 DE 19610416
(43) Veröffentlichungstag der Anmeldung: 17.09.1997
(73) Patentinhaber: Maschinenfabrik Alfing Kessler GmbH, 73433 Aalen-Wasseralfingen (DE)
(72) Erfinder: Ottenwälder, Adalbert, 74597 Stimpfach (DE); Machnig, Manfred, 73433 Aalen (DE); Kullick, Dieter, 73441 Trochtelfingen (DE); Fuchs, Rudolf, 73434 Aalen (DE)
(74) Vertreter: Lorenz, Werner, Dipl.-Ing.

(56) Entgegenhaltungen:
- DE-A- 4 029 724
- FR-A- 2 322 507
- US-A- 4 714 809
- US-A- 4 720 311
- US-A- 4 759 808
- PATENT ABSTRACTS OF JAPAN vol. 014, no. 480 (C-0771), 19.Oktober 1990 & JP 02 197517 A (MITSUBISHI MOTORS CORP), 6.August 1990,

## Beschreibung

Die Erfindung betrifft ein Verfahren zum induktiven Randschichthärten von Werkstücken mit beliebigen Außenformgeometrien insbesondere von Nockenwellen von Brennkraftmaschinen, mit einem Induktor, der das Werkstück wenigstens teilweise umfaßt. Die Erfindung betrifft außerdem eine Vorrichtung zur Durchführung des Verfahrens.

Beim induktiven Härten von Außenformgeometrien, die von einer Kreisform abweichen, insbesondere von unregelmäßig geformten Geometrien, wie es z.B. bei Nockenwellen der Fall ist, ergeben sich erhebliche Probleme damit, einheitliche Einhärtetiefen über den Umfang zu erreichen. Voraussetzung für eine einheitliche Einhärtetiefe ist nämlich die Einhaltung einer konstanten Erwärmungszone, d.h. eines konstanten bzw. vorgewählten Abstandes zwischen dem Induktor und der Außenformgeometrie des zu härtenden Werkstückes. Wird das Werkstück während des Härtevorganges um seine Längsachse gedreht, so ergeben sich bei einer von der Kreisform abweichenden Außenformgeometrie unterschiedliche Kopplungsabstände und damit unterschiedliche Einhärtetiefen.

Eine andere Möglichkeit zum Randschichthärten besteht darin, daß das Werkstück im Stillstand erwärmt wird, wobei der Induktor mit einer entsprechenden Negativform über das Werkstück gesetzt ist. In diesem Falle sind beide Teile, nämlich Werkstück und Induktor feststehend. Aber auch in dem Falle, in dem der Induktor die Negativform der Außenformgeometrie des Werkstückes aufweist, ergeben sich aufgrund physikalischer Gegebenheiten nicht überall gleiche Wärmebilder und damit wiederum unterschiedliche Härtezonen.

In der DE 40 29 724 A1 ist eine Vorrichtung zum induktiven Randschichthärten von Werkstücken mit glatten Hüllkurven, insbesondere von Nockenwellen von Brennkraftmaschinen, mit einem Induktor beschrieben, der das Werkstück umfaßt. Dabei führt das Werkstück eine gleichförmige Abwälzbewegung durch. Während des Erwärmungsvorganges des Werkstückes bleibt der Kopplungsabstand konstant, was durch eine gesteuerte Bewegung des Induktors erreicht wird. Entsprechend der Kontur des zu härtenden Werkstückes muß der Induktor einen sehr komplizierten CNC-angesteuerten Bewegungsablauf an einem Kreuztisch durchführen. Dabei muß der CNC-Kreuztisch über eine Software auf komplizierte Weise nachgeführt werden.

Der vorliegenden Erfindung liegt daher die Aufgabe zugrunde ein Verfahren und eine Vorrichtung zum induktiven Randschichthärten zu schaffen, wobei beliebige Außenformgeometrien so gehärtet werden können, daß stets gleiche bzw. vorgewählte Kopplungsabstände eingehalten werden können und damit im Bedarfsfalle auch gleiche oder auch gezielte Einhärtetiefen erreicht werden können.

Erfindungsgemäß wird diese Aufgabe durch die im kennzeichnenden Teil von Anspruch 1 genannten Merkmale gelöst.

Durch das erfindungsgemäße Verfahren ergibt sich ein konstanter bzw. partiell genau definierter Kopplungsabstand und damit gleichmäßige Erwärmungszonen, wodurch ein homogenes Umwandlungsgefüge bei der Härtung und damit eine konstante Einhärtetiefe erreicht wird. Die konstante Erwärmungszone hat weiterhin den Vorteil, daß ein Wärmeverzug des zu härtenden Werkstückes minimal bleibt.

Praktisch stellt der Induktor eine Parallele zur Abwälzkurve der Werkstückaußenkontur dar bzw. ist diese äquvidistant zu der Werkstückkontur, wenn ein konstanter Kopplungsabstand gewünscht wird. Falls unterschiedliche Einhärtetiefen über dem Umfang gewünscht werden oder die Massenverhältnisse des Werkstückes dies für eine einheitliche Einhärtetiefe erforderlich machen, kann der Kopplungsabstand auch partiell geändert werden.

Erfindungsgemäß ist dabei vorgesehen, daß das Werkstück im Inneren des Induktors um eine zentrale Achse D1 umläuft und sich zusätzlich noch während eines Umlaufes in einem ganzzahligen Verhältnis um eine Achse D2 um sich selbst dreht.

Durch die erfindungsgemäßen Drehbewegungen um die Drehachsen D1 und D2 ergibt sich auf einfache Weise eine gleichförmige Abwälzbewegung des Werkstückes im Induktor. Jede Oberflächenposition besitzt einen festen Bezug zu einer definierten Position an dem stillstehenden Induktor. Auf diese Weise wird auch sichergestellt, daß die Einhärtetiefe an jedem beliebigen Oberflächenpunkt des Werkstückes individuell gesteuert werden kann. Durch das erfindungsgemäße Verfahren wird gewährleistet, daß der senkrechte Abstand zur Tangente im Schnittpunkt der verlängerten Linien durch die Drehachsen D1 und D2 mit der Werkstückaußenkontur zur Innenkontur des Induktors, d.h. des Kopplungsabstandes, konstant gehalten werden kann.

In einer sehr vorteilhaften Weiterbildung der Erfindung kann vorgesehen sein, daß der Kopplungsabstand durch eine Änderung des Abstandes der beiden Achsen eingestellt wird.

Durch diese Maßnahme lassen sich gezielt vorgewählte Einhärtetiefen, die auch eingehalten werden können, auswählen bzw. vorwählen.

In einer Weiterbildung der Erfindung hat dieses Verfahren auch den Vorteil, daß man bei Änderungen in der Leistung des Induktors bzw. unterschiedlichen Leistungseinspeisungen in ausgewählten Umfangsbereichen die Einhärtetiefe an gewünschten Radialpositionen getrennt beeinflussen kann. Bezogen auf das Härten einer Nockenwelle bedeutet dies, daß man z.B. im Bereich der Nocken eine größere Einhärtetiefe durch eine entsprechende Leistungssteuerung des Induktors im Bereich der Nocke erreichen kann als auf dem Grundkreis der Nokkenwelle. Hierzu ist es lediglich erforderlich, daß der Induktor bezüglich seiner Leistung in dem Bereich der Umwälzkurve, in welchem diese Geometriezuordnung vorliegt, entsprechend gesteuert wird.

Eine erfindungsgemäße Vorrichtung zur Durchführung des Verfahrens mit einem in einer Aufspanneinrichtung aufgenommenen Werkstück und mit einem Induktor, kann darin bestehen, daß das Werkstück in wenigstens einem um eine Drehachse drehbaren Werkstückaufnahmeglied aufgenommen ist, wobei das Werkstückaufnahmeglied selbst drehbar in einer zentralen Drehachse angeordnet ist, und die Vorrichtung Mittel aufweist, damit die Drehzahlen der sich drehenden Teile in einem feststehenden ganzzahligen Verhältnis zueinander stehen können und damit die Innenkontur des Induktors der Abwälzkurve des Werkstückes entsprechen kann.

Die erfindungsgemäßen beiden Drehbewegungen um die Drehachsen D1 und D2 können in einer konstruktiv einfachen Ausgestaltung durch ein Planetengetriebe verwirklicht werden.

Wenn an einem Werkstück mehrere Härtezonen vorhanden sind, die in axialer Richtung hintereinander liegen, so ist in einer Weiterbildung der Erfindung vorgesehen, daß mehrere Induktoren, die innenseitig die Abwälzform des Werkstückes aufweisen, nebeneinander entlang der Längsachse des zu härtenden Werkstückes angeordnet sind. Auf diese Weise kann im Bedarfsfalle das Werkstück in einem Arbeitsgang gehärtet werden.

Der Induktor kann aus mehreren Windungen bestehen. Dies hat den Vorteil eines besseren Wirkungsgrades. So kann z.B. die Wirkbreite damit eingestellt werden.

Nachfolgend ist ein Ausführungsbeispiel der Erfindung anhand der Zeichnung prinzipmäßig näher beschrieben.

Es zeigt:
- Fig. 1: Gesamtansicht einer erfindungsgemäßen Vorrichtung zum induktiven Härten einer Nockenwelle;

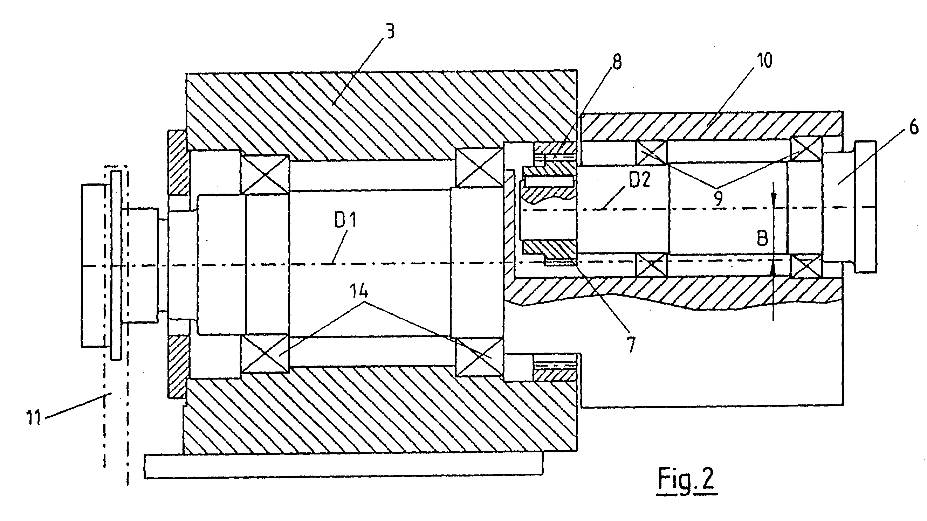

- Fig. 2: eine vergrößerte Darstellung der Aufspanneinrichtung mit den beiden Drehachsen; und
- Fig. 3: eine Prinzipdarstellung der Kontur der Nockenwelle und dessen Abwälzkontur zusammen mit der Induktorkontur.

Auf einer Werkzeugmaschine 1 ist eine Nockenwelle 2 an beiden Stirnseiten jeweils in einer Aufspanneinrichtung 3 aufgenommen. Die Nockenwelle 2 weist in bekannter Weise koaxial zu ihrer Längsachse 5 angeordnete kreisförmige Abschnitte und von der Kreisform abweichende Nocken 4 auf. Die Nockenwelle 2 ist in den beiden Aufspanneinrichtungen 3 derart aufgenommen, daß dessen Längsachse 5 koaxial zu einer Drehachse D2 liegt. Um die Drehachse D2 rotiert ein Werkstückaufnahmeglied 6, das stirnseitig mit der Nockenwelle 2 verbunden ist. Am hinteren Ende des Werkstückaufspanngliedes 6 ist ein Zahnrad 7 angeordnet, das mit einem Hohlzahnrad 8 in Zahneingriff steht. Das Werkstückaufspannglied 6 selbst ist über Wälzlager 9 in einen Zentralblock 10 aufgenommen, der sich um eine Drehachse D1 dreht. Der Zentralblock 10 wird über einen Riemen- oder Kettenantrieb 11 in nicht näher dargestellter Weise durch einen Motor 12 angetrieben. Durch eine Wellenverbindung 13 ist dafür gesorgt, daß die beiden Aufspanneinrichtungen 3, die identisch ausgebildet sind, drehzahlsynchron angetrieben werden. Der Zentralblock 10 ist über Wälzlager 14 im Gehäuse der Aufspanneinrichtung 3 gelagert.

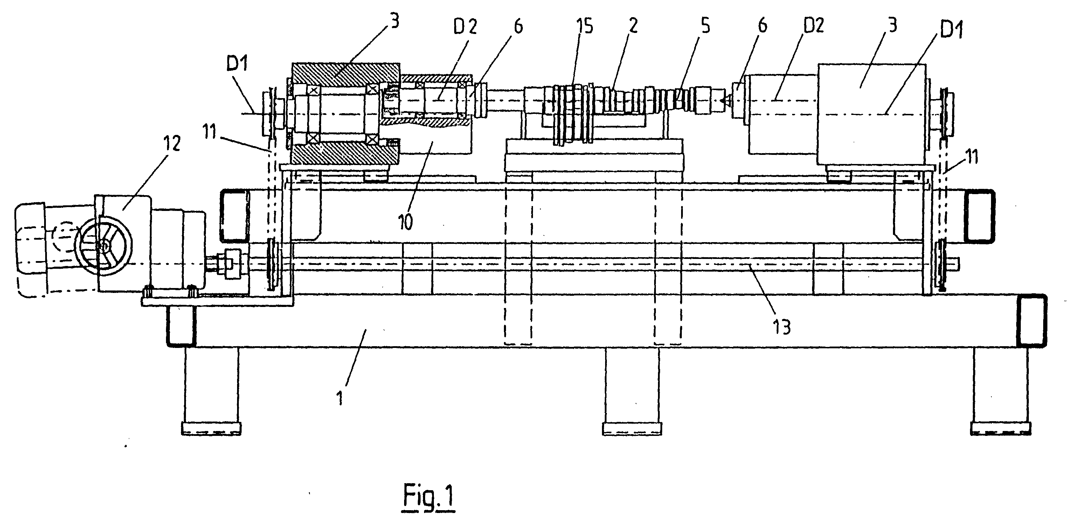

Ein in der Fig. 1 schematisch dargestellter Induktor 15 umgibt die zu härtenden Bereiche der Nockenwelle 2.

Aufgrund der Einspannung der Nockenwelle 2 und der Rotation um die Drehachsen D1 und D2 und deren Zuordnung zueinander ergibt sich eine Abwälzkontur der Nokkenwelle 2.

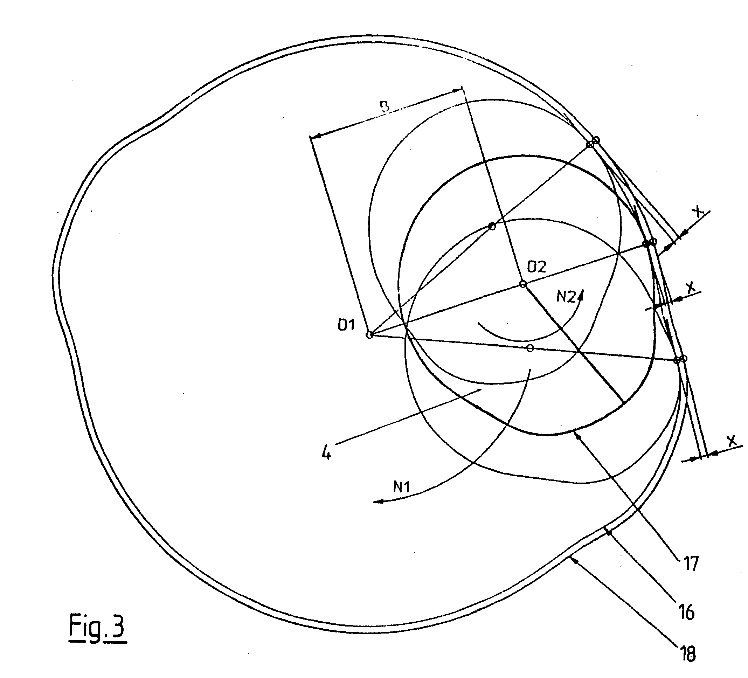

Aus der Fig. 3 ergibt sich die entsprechende geometrische Zuordnung, die am Beispiel einer Nocke 4 der Nokkenwelle 2 dargestellt ist. Wie ersichtlich liegt ein Abstand B zwischen der Drehachse D1 und der Drehachse D2 vor. Bei der Drehung der Nockenwelle 2 bewegt sich deren Außenformgeometrie entlang ihrer durch die Getriebeabhängigkeit der Aufspanneinrichtung 3 vorgegebene Abwälzkurve 16. Mit "17" ist die Kontur des Nokkens 4 dargestellt. Wie ersichtlich sind dabei zur Erläuterung drei verschiedene Positionen des Nockens 4 in die Fig. 3 eingezeichnet, um die Abwälzbewegung zu verdeutlichen. Aufgrund der durch die Getriebeabhängigkeit entstehenden Abwälzkurve 16 wird gewährleistet, daß der senkrechte Abstand zur Tangente im Schnittpunkt der verlängerten Linie durch die Drehachsen D1 und D2 mit der Kontur der Nockenwelle bzw. des Nockens 4 zu der entsprechend vorgewählten Innenkontur 18 des Induktors 15 konstant bleibt. Dies ist der Kopplungsabstand X. Die Innenkontur 18 des Induktors 15 stellt eine Parallele zur Abwälzkurve 16 des Nokkens 4 dar bzw. die Innenkontur 18 ist äquvidistant zur Abwälzkurve 16.

Durch diese geometrisch fest zugeordnete Drehbewegung der Nockenwelle 2 innerhalb des Induktors 15 bei einer konstanten Drehzahl für die Drehachse D2 und der daraus resultierenden eine entsprechende Abhängigkeit besitzenden Drehzahl der Drehachse D1 ergibt sich eine gleichförmige Abwälzbewegung der Nockenwelle 2 im Inneren des Induktorfreiraumes. Jede Oberflächenposition besitzt einen festen Bezug zu einer definierten Position am Induktor 15. Auf diese Weise läßt sich auch sicherstellen, daß die Einhärtetiefe an jedem beliebigen Oberflächenpunkt des Nockens 4 individuell gesteuert werden kann.

Eine individuelle Steuerung ist z.B. dadurch möglich, daß in einem gewünschten Umfangsbereich die Leistung des Induktors 15 und damit die Einhärtetiefe geändert wird. Auf diese Weise läßt sich z.B. eine größere Einhärtetiefe des Nockens 4 im Bereich seiner Erhöhung als in seinem Grundkreis erreichen. Das gleiche Ergebnis kann auch durch eine partielle Veränderung des Kopplungsabstandes erreicht werden.

Durch eine Änderung des Abstandes B der beiden Drehachsen D1 und D2 ändert sich damit auch der Kopplungsabstand X, d.h. der Abstand der Abwälzkurve 16 von der Innenkontur 18 des Induktors 15, womit durch diese Veränderung auch die Einhärtetiefe gesteuert werden kann.

Selbstverständlich können im Rahmen der Erfindung auch mehrere Induktoren 15 axial nebeneinander an der zu härtenden Nockenwelle 2 im Bereich der Stellen, die gehärtet werden sollen, vorgesehen werden, sofern man nicht nach durchgeführter Härtung den Induktor 15 jeweils entsprechend axial verschieben möchte.

Eine Änderung des Abstandes B kann konstruktiv auf verschiedene Weise erreicht werden. Hierzu kann z.B. ein Axialausgleichsgetriebe, ein Kardangelenk, ein Kreuzgelenk oder ähnliches vorgesehen sein.

Anstelle der Erzeugung einer Abwälzkurve für die Nokkenwelle durch das dargestellte Getriebe mit den Drehachsen D1 und D2 kann die Abwälzkurve auch auf andere Weise erreicht werden. So kann z.B. eine Spindel, entsprechend dem Zentralblock 10 koaxial angetrieben werden, oder die Einspannpunkte der Nockenwelle 2 werden in Abhängigkeit von der Rotation durch die Spindel numerisch in x- und y-Ebene verstellt. Dies kann z.B. durch einen Kreuzschlitten erfolgen. Im Bedarfsfalle kann z.B. auch das im Gehäuse angeordnete Hohlrad 8 durch eine Verstelleinrichtung in Umfangsrichtung, z.B. um 120°, verstellt werden, um einen Winkelversatz der Nockenpakete auf der Nockenwelle ausgleichen zu können. Auf diese Weise kann man z.B. mit einer Induktionshärteeinrichtung die Nocken eines Zylinders und anschließend nach einem Versetzen des Hohlzahnrades um z.B. 120° die Nocken des nächsten Zylinders härten. Durch die Verdrehung des Hohlzahnrades 8 läßt sich auf diese Weise ein Zündfolgeversatz berücksichtigen.

Anstelle einer Abwälzkurve 16 für die Nockenwelle bzw. die Nocken 4 der Nockenwelle in Form einer geschlossenen Kurve kann man die Kontur der Nockenwelle 2 auch horizontal abwälzen. Dabei wird die Nockenwelle 2 um sich selbst gedreht. Um die horizontale Abwälzkurve zu ergeben wird dabei die Nockenwelle mit einem Ritzel verbunden, das mit einer Zahnstange entsprechend zusammenarbeitet. Durch die Drehbewegung des Ritzels in Verbindung mit der Zahnstange ergibt sich der Vorschub der Nockenwelle 2 in horizontaler Richtung und zwar quer zur Längsachse der Nockenwelle 2. Auf diese Weise ergibt sich wiederum eine Abwicklung der Nockenwelle 2, der die Innenkontur des Induktors mit konstantem Kopplungsabstand gegenüberliegt.

Das Härten der Nockenwelle 2 auf der Werkzeugmaschine 1 kann z.B. bei einer Antriebsdrehzahl von 120 U/min des Motores 12 erfolgen, womit das Werkstückaufnahmeglied und damit die Nockenwelle 2 bei dem dargestellten Ausführungsbeispiel mit 240 U/min umläuft. Die Härtung kann dabei z.B. innerhalb 20 Sekunden erfolgen, wobei während der Rotation der Nockenwelle 2 entsprechend pro Umlauf bei vorgegebenem Kopplungsabstand jeweils eine Erwärmung eines Nockenwellenbereiches erfolgt. Nach 20 Sekunden und damit nach Erreichen der gewünschten Härtetemperatur erfolgt in bekannter Weise eine Abschreckung der Nockenwelle. Selbstverständlich richtet sich die Drehzahl nach dem Anwendungsfall und kann entsprechend variiert werden. Gleiches gilt für die Erwärmungszeit.

## Patentansprüche

1. Verfahren zum induktiven Randschichthärten von Werkstücken mit beliebigen Außenformgeometrien, insbesondere von Nockenwellen von Brennkraftmaschinen, mit einem Induktor, der das Werkstück wenigstens teilweise umfaßt,
**dadurch gekennzeichnet**, daß
das Werkstück (2 bzw. 4) eine gleichförmige Abwälzbewegung durchführt, wobei es im Inneren des Induktors (15) um eine zentrale Achse (D1) umläuft und sich zusätzlich noch während eines Umlaufes in einem ganzzahligen Übersetzungsverhältnis um eine Achse (D2) um sich selbst dreht und damit bei einem gleichbleibenden Kopplungsabstand (X) die Innenkontur (18) des Induktors (15) eine Parallele zur Abwälzkontur (16) des Werkstückes (2 bzw. 4) darstellt.

2. Verfahren nach Anspruch 1,
**dadurch gekennzeichnet**, daß
der Kopplungsabstand (X) durch eine Änderung des Abstandes (B) der beiden Achsen (D1,D2) eingestellt wird.

3. Verfahren nach Anspruch 1 oder 2,
**dadurch gekennzeichnet**, daß
die Leistung des Induktors (15) während des Umlaufes des Werkstückes (2 bzw. 4) verändert wird.

4. Verfahren nach einem der Ansprüche 1 bis 3,
**dadurch gekennzeichnet**, daß
der Kopplungsabstand an beliebigen Stellen zum Werkstück (2 bzw. 4) eingestellt werden kann.

5. Vorrichtung zur Durchführung des Verfahrens nach einem der Ansprüche 1 bis 4 mit einem in einer Aufspanneinrichtung aufgenommenen Werkstück und mit einem Induktor,
**dadurch gekennzeichnet**, daß
das Werkstück (2 bzw. 4) in wenigstens einem um eine Drehachse (D2) drehbaren Werkstückaufnahmeglied (6) aufgenommen ist, wobei das Werkstückaufnahmeglied (6) selbst drehbar um eine zentrale Drehachse (D1) ist, und die Vorrichtung Mittel aufweist, damit die Drehzahlen der sich drehenden Teile in einem feststehenden Verhältnis zueinander stehen können, und damit die Innenkontur (18) des Induktors (15) der Abwälzkontur (17) des Werkstückes (2 bzw. 4) entsprechen kann.

6. Vorrichtung nach Anspruch 5,
**dadurch gekennzeichnet**, daß
die beiden Drehachsen (D1,D2) Teile eines Planetengetriebes sind.

7. Vorrichtung nach Anspruch 5 oder 6,
**dadurch gekennzeichnet**, daß
mehrere Induktoren (15), die innenseitig die Abwälzkontur (17) des Werkstückes (2 bzw. 4) aufweisen, nebeneinander entlang der Längsachse (5) des zu härtenden Werkstückes (2 bzw. 4) angeordnet sind.

8. Vorrichtung nach einem der Ansprüche 5 bis 7,
**dadurch gekennzeichnet**, daß
der Induktor (15) aus mehreren Windungen besteht.

## Revendications

1. Procédé pour la trempe par induction de couches superficielles de pièces à usiner comportant des formes géométriques extérieures quelconques, en particulier d'arbres à cames de moteurs à combustion interne, comprenant un inducteur qui entoure au moins partiellement la pièce à usiner,
**caractérisé en ce que**
la pièce à usiner (2 ou 4) décrit un mouvement de développante uniforme dans lequel elle tourne autour d'un axe central (D1) à l'intérieur de l'inducteur (15) et, en outre, tourne aussi sur elle-même autour d'un axe (D2) pendant un tour de rotation, dans un rapport de transmission entier et, de ce fait, avec une distance de couplage (X) constante, le profil intérieur (18) de l'inducteur (15) présente une ligne parallèle au contour de la développante (16) de la pièce à usiner (2 ou 4).

2. Procédé selon la revendication 1,
**caractérisé en ce que**
la distance de couplage (X) est réglée par une modification de la distance (B) entre les deux axes (D1, D2).

3. Procédé selon la revendication 1 ou 2,
**caractérisé en ce que**
la puissance de l'inducteur (15) est modifiée pendant la rotation de la pièce à usiner (2 ou 4).

4. Procédé selon l'une des revendications 1 à 3,
**caractérisé en ce que**
la distance de couplage peut être réglée en des points quelconques par rapport à la pièce à usiner (2 ou 4).

5. Dispositif pour la mise en oeuvre du procédé selon l'une des revendications 1 à 4, comprenant une pièce à usiner placée dans un dispositif de fixation et un inducteur,
**caractérisé en ce que**
la pièce à usiner (2 ou 4) est placée dans au moins un élément de réception (6) de pièce à usiner, qui peut tourner autour d'un axe de rotation (D2), l'élément de réception (6) de la pièce à usiner pouvant tourner lui-même autour d'un axe de rotation central (D1), et le dispositif comportant des moyens pour que les vitesses de rotation des éléments rotatifs puissent avoir entre elles un rapport fixe et, de ce fait, pour que le contour intérieur (18) de l'inducteur (15) puisse correspondre au contour de la développante (17) de la pièce à usiner (2 ou 4).

6. Dispositif selon la revendication 5,
**caractérisé en ce que**
les deux axes de rotation (D1, D2) font partie d'un engrenage épicycloïdal.

7. Dispositif selon la revendication 5 ou 6,
**caractérisé en ce que**
plusieurs inducteurs (15) qui comportent intérieurement le contour de la développante (17) de la pièce à usiner (2 ou 4) sont disposés l'un à côté de l'autre le long de l'axe longitudinal (5) de la pièce à usiner (2 ou 4) qu'il s'agit de tremper.

8. Dispositif selon l'une des revendications 5 à 7,
**caractérisé en ce que**
l'inducteur (15) comporte plusieurs enroulements.

## Claims

1. Method of inductive surface hardening of workpieces of any desired external geometrical shape, in particular of camshafts of internal combustion engines, with an inductor which at least partially encloses the workpiece,
**characterised in that**
the workpiece (2 or 4) performs a uniform orbital motion, whereby it moves round about a central axis (D1) within the inductor (15) and additionally, while moving round, rotates about itself about an axis (D2) with a whole-number gearing ratio and thereby, while achieving a constant coupling spacing (X) with the inside profile (18) of the inductor (15), it lies on a parallel to the orbiting profile (16) of the workpiece (2 or 4).

2. Method according to claim 1,
**characterised in that**
the coupling distance (X) is adjusted by altering the distance (B) between the two axes (D1,D2).

3. Method according to claim 1 or 2,
**characterised in that**
the power of the inductor (15) is varied during the orbital movement of the workpiece (2 or 4).

4. Method according to one of claims 1 to 3,
**characterised in that**
the coupling spacing can be adjusted at selected positions with respect to the workpiece (2 or 4).

5. Device for performing the method according to one of claims 1 to 4 with a workpiece received in a clamping device and with an inductor,
**characterised in that**
the workpiece (2 or 4) is received in at least one workpiece receiving member (6) which is rotatable about an axis of rotation (D2), the workpiece receiving member (6) itself being rotatable about a central axis of rotation (D1), and the device having means whereby the speeds of rotation of the rotating parts can bear a fixed ratio to one another, and thereby the inside profile (18) of the inductor (15) can correspond to the orbital profile (17) of the workpiece (2 or 4).

6. Device according to claim 5,
**characterised in that**
the two axes of rotation (D1,D2) form parts of a planetary gearing arrangement.

7. Device according to claim 5 or 6,
**characterised in that**
a number of inductors (15), which have inside them the orbital profile (17) of the workpiece (2 or 4), are mounted side by side along the longitudinal axis (5) of the workpiece (2 or 4) to be hardened.

8. Device according to one of claims 5 to 7,
**characterised in that**
the inductor (15) has a plurality of windings.
